# FASCICULE DE BREVET EUROPEEN

(11) **EP 0 784 759 B1**
(45) Date de publication et mention de la délivrance du brevet: **23.12.1998**
(21) Numéro de dépôt: 95931268.7
(22) Date de dépôt: 20.09.1995
(51) Int. Cl.: F16D 55/227

(54) **FREIN A DISQUE A MONTAGE AMELIORE**
SCHEIBENBREMSE MIT VERBESSERTER BEFESTIGUNG
IMPROVED ASSEMBLY DISC BRAKE

(30) Priorité: 13.10.1994 FR 9412184
(43) Date de publication de la demande: 23.07.1997
(73) Titulaire: Bosch Systemes de Freinage, 93700 Drancy (FR)
(72) Inventeur: LE DEIT, Gérard, F-77181 Courtry (FR); GERARD, Jean-Louis, F-93170 Bagnolet (FR); MERY, Jean-Claude, F-93320 Pavillons-sous-Bois (FR); TRIBUZIO, Pasquale, I-70032 Bitonto (IT); TRISTANO, Nicolas, I-75100 Matera (IT)
(74) Mandataire: Bentz, Jean-Paul
(86) Numéro de dépôt international: FR9501206
(87) Numéro de publication internationale: WO9612117

(56) Documents cités:
- DE-U- 9 305 631
- FR-A- 2 631 405
- GB-A- 2 021 217
- GB-A- 2 087 997

## Description

La présente invention concerne un frein à disque pour véhicule à moteur, comprenant : un étrier chevauchant un disque de frein; une chape fixée au véhicule; des moyens de serrage comprenant un cylindre solidaire de l'étrier et fermé par un piston; des moyens de guidage permettant un coulissement de l'étrier par rapport à la chape lors d'un actionnement des moyens de serrage, ces moyens de guidage comportant eux-mêmes des première et seconde colonnettes identiques, cylindriques, parallèles l'une à l'autre et présentant chacune une extrémité liée fixée à l'étrier et une extrémité libre, et des premier et second logements au moins partiellement formés par des premier et second alésages respectifs pratiqués dans la chape et dans lesquels coulissent respectivement les première et seconde colonnettes, l'une au moins de ces colonnettes étant fixée à l'étrier par des moyens de fixation réglables lui permettant d'adopter, avant sa fixation définitive sur l'étrier, une pluralité de positions possibles espacées l'une de l'autre suivant une direction tangentielle au disque; et deux patins de friction tournés vers des faces opposées du disque, enserrés entre le piston et l'étrier, et appliqués sur le disque lors de l'actionnement des moyens de serrage, le premier alésage présentant, sur des première et seconde sections contigües de sa longueur, des premier et second diamètres internes respectifs dont le second est plus grand que le premier, et le plus petit diamètre étant ménagé dans celle des deux sections du premier alésage que la première colonnette rencontre en premier lieu en y pénètrant.

La réalisation de freins dits "à étrier coulissant" se heurte à plusieurs difficultés, notamment pour l'obtention d'un centrage précis des colonnettes dans les logements de la chape au moment du montage du frein, et d'un bon coulissement de ces colonnettes dans les logements lors de l'actionnement de ce frein.

Par exemple, le document DE-U-9 305 631 décrit un frein du type précité, dans lequel le plus petit diamètre du premier alésage est réalisé au moyen d'une pièce rapportée.

Bien que la constitution de cette pièce ne soit pas décrite, la lecture de ce document suggère qu'elle est déformable.

Dans ces conditions, un tel frein pose le problème de montage classique qui se manifeste par le fait que les colonnettes ont tendance à se décentrer au moment où elles sont vissées, la pièce rapportée déformable n'étant pas susceptible de s'opposer à ce décentrage, et les montages rigides connus par ailleurs n'étant pas susceptibles d'éviter l'apparition de coincements dégradant les performances du frein.

L'invention se situe dans ce contexte et a pour but de proposer un frein à disque à étrier coulissant, dont la structure soit simple et le montage aisé.

A cette fin, le frein de l'invention essentiellement caractérisé en ce que le premier logement est formé, en plus du premier alésage, par l'intérieur d'une bague en matériau élastomère disposée dans le prolongement de la première section du premier alésage, de façon contiguë à cette première section, et à distance de la seconde section et en ce que le second alésage présente sur toute sa longueur un diamètre égal audit petit diamètre.

De préférence, la première section a en outre une longueur inférieure à celle de la seconde section, et le second logement est au moins partiellement formé par une seconde bague en matériau élastomère, semblable à la première.

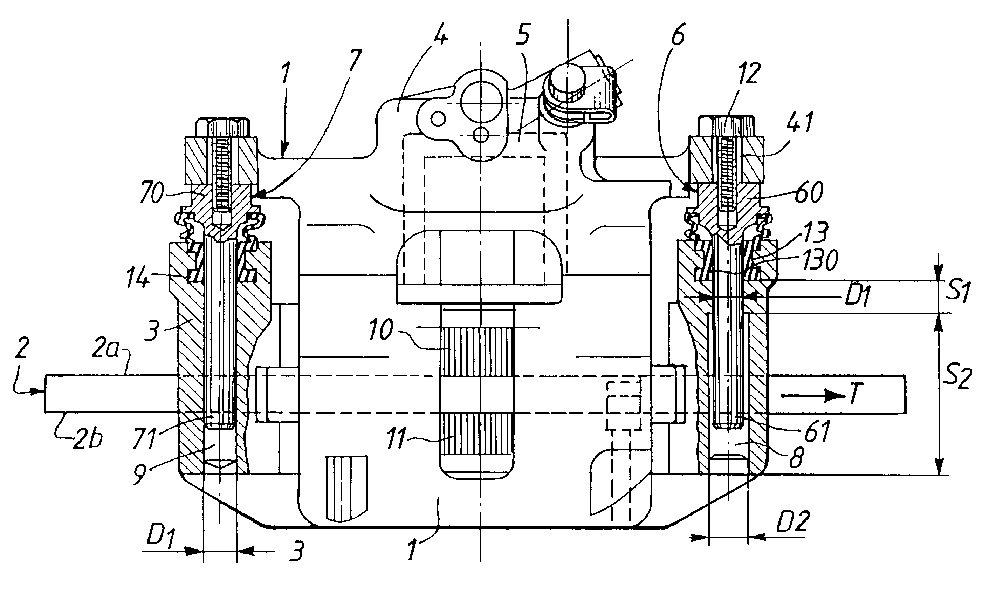

D'autres caractéristiques et avantages de l'invention ressortiront clairement de la description qui en est faite ci-après, à titre indicatif et nullement limitatif, en référence aux dessins annexés, dans lesquels la figure unique est une vue en coupe partielle d'un frein conforme à l'invention.

Comme le montre cette figure, l'invention concerne un frein à disque pour véhicule à moteur, comprenant: un étrier 1 chevauchant un disque 2 de frein; une chape 3 fixée au véhicule; des moyens de serrage comprenant un cylindre 4 solidaire de l'étrier et fermé par un piston 5; des moyens de guidage 6, 7, 8, 9 permettant un coulissement de l'étrier par rapport à la chape lors d'un actionnement des moyens de serrage; et deux patins de friction 10, 11 tournés vers des faces opposées 2a, 2b du disque 2, enserrés entre le piston et l'étrier, et appliqués sur le disque lors de l'actionnement des moyens de serrage.

Les moyens de guidage comportent eux-mêmes des première et seconde colonnettes 6, 7 identiques, cylindriques, parallèles l'une à l'autre et présentant chacune une extrémité liée 60, 70 fixée à l'étrier et une extrémité libre 61, 71, et des premier et second logements partiellement formés par des premier et second alésages respectifs 8, 9 pratiqués dans la chape, et dans lesquels coulissent respectivement les première et seconde colonnettes.

L'une au moins des colonnettes, par exemple la colonnette 6, est fixée à l'étrier par une vis 12 traversant avec jeu un orifice 41 de l'étrier, cette vis permettant ainsi à la colonnette 6 d'adopter, avant sa fixation définitive sur l'étrier, une pluralité de positions possibles espacées l'une de l'autre suivant une direction T tangentielle au disque, en fonction de la position que la vis 12 adopte elle-même dans l'orifice 41.

Selon l'invention, le premier alésage 8 présente, sur des première et seconde sections contiguës S1 et S2 de sa longueur, des premier et second diamètres internes respectifs, D1 et D2, dont le second, D2, est plus grand que le premier D1, le plus petit diamètre, D1, étant ménagé dans celle des deux sections S1 du premier alésage 8 que la première colonnette 6 rencontre en premier lieu en y pénétrant.

En fait, le terme "alésage" dans la présente description et dans les revendications doit être compris dans un sens très large, l'alésage étagé 8 pouvant par exemple être réalisé à partir d'un alésage cylindrique à l'intérieur duquel est insérée à force une bague rigide de diamètre interne D1, recouvrant et formant la première section S1.

Par ailleurs, le premier logement est formé, en plus du premier alésage 8, par l'intérieur 130 d'une bague 13 en matériau élastomère disposée dans le prolongement de la première section S1 du premier alésage 8, de façon contigüe à cette première section S1, et à distance de la seconde section S2.

De plus, la bague 13 assure une fonction de centrage de la colonnette, permettant de placer cette dernière dans une position optimale et d'amortir les vibrations de l'étrier.

Grâce à cet agencement, non seulement le recours à une première section S1 de diamètre réduit dans l'alésage de la chape permet d'utiliser deux colonnettes identiques tout en assurant néanmoins un centrage précis de ces colonnettes sur les alésages correspondants, mais la précision de la mise en place de la première colonnette dans le premier alésage est même améliorée par le fait que cette colonnette est guidée au montage, par la première section S1, à proximité de l'extrémité liée 60 de cette colonnette 8.

De préférence, la première section S1 du premier alésage 8 a en outre une longueur inférieure à celle de la seconde section S2, et le second logement est au moins partiellement formé par une seconde bague 14 en matériau élastomère, semblable à la première bague 13, le second alésage 9 présentant sur toute sa longueur le même diamètre D1 que la première section S1 du premier alésage 8, et recevant la seconde colonnette 7 avec un jeu réduit sur toute sa longueur.

## Revendications

1. Frein à disque pour véhicule à moteur, comprenant : un étrier (1) chevauchant un disque (2) de frein; une chape (3) fixée au véhicule; des moyens de serrage comprenant un cylindre (4) solidaire de l'étrier et fermé par un piston (5); des moyens de guidage permettant un coulissement de l'étrier par rapport à la chape lors d'un actionnement des moyens de serrage, ces moyens de guidage comportant eux-mêmes des première et seconde colonnettes (6, 7) identiques, cylindriques, parallèles l'une à l'autre et présentant chacune une extrémité liée (60, 70) fixée à l'étrier et une extrémité libre (61, 71), et des premier et second logements au moins partiellement formés par des premier et second alésages respectifs (8, 9) pratiqués dans la chape et dans lesquels coulissent respectivement les première et seconde colonnettes, l'une au moins de ces colonnettes étant fixée à l'étrier par des moyens de fixation réglables (12, 41) lui permettant d'adopter, avant sa fixation définitive sur l'étrier, une pluralité de positions possibles espacées l'une de l'autre suivant une direction (T) tangentielle au disque; et deux patins de friction (10, 11) tournés vers des faces opposées (2a, 2b) du disque (2), enserrés entre le piston et l'étrier, et appliqués sur le disque lors de l'actionnement des moyens de serrage, le premier alésage (8) présentant, sur des première et seconde sections contigües (S1, S2) de sa longueur, des premier et second diamètres internes respectifs (D1, D2) dont le second (D2) est plus grand que le premier (D1), et le plus petit diamètre (D1) étant ménagé dans celle des deux sections du premier alésage (8) que la première colonnette (6) rencontre en premier lieu en y pénètrant, caractérisé en ce que le premier logement est formé, en plus du premier alésage (8), par l'intérieur (130) d'une bague (13) en matériau élastomère disposée dans le prolongement de la première section (S1) du premier alésage (8), de façon contigüe à cette première section (S1), et à distance de la seconde section (S2) et en ce que le second alésage (9) présente sur toute sa longueur un diamètre égal audit petit diamètre (D1).

2. Frein à disque suivant la revendication 1, caractérisé en ce que la première section (S1) a une longueur inférieure à celle de la seconde section (S2).

3. Frein à disque suivant la revendication 1 ou 2, caractérisé en ce que le second logement est au moins partiellement formé par une seconde bague (14) en matériau élastomère, semblable à la première.

## Patentansprüche

1. Scheibenbremse für ein Motorfahrzeug mit: einem Bremssattel (1), der eine Bremsscheibe (2) umgreift; einem am Fahrzeug befestigten Bügel (3); Spannmitteln mit einem Zylinder (4), der fest mit dem Bremssattel verbunden und durch einen Kolben (5) verschlossen ist; Führungsmitteln, die ein Verschieben des Bremssattels bezüglich des Bügels bei einer Betätigung der Spannmittel zulassen, wobei diese Führungsmittel selbst eine erste und eine zweite identische, zylindrische Stange haben (6, 7), die zueinander parallel sind und von denen jede ein verbundenes Ende (60, 70) aufweist, das am Bügel befestigt ist, und ein freies Ende (61, 71), und einen ersten und einen zweiten Sitz, die zumindest teilweise durch eine erste bzw. eine zweite entsprechende Bohrung (8, 9) ausgeführt sind, die im Bügel gebildet sind und in denen die erste bzw. zweite Stange gleiten, wobei mindestens eine der Stangen mit einstellbaren Befestigungsmitteln (12, 41) am Bügel befestigt ist, die es ihr ermöglichen, vor der endgültigen Befestigung am Bügel mehrere mögliche Stellungen einzunehmen, die entlang einer zur Scheibe tangentialen Richtung (T) voneinander beabstandet sind; und zwei Reibbelägen (10, 11), die voneinander abgewandten Seiten (2a, 2b) der Scheibe (2) zugewandt sind, zwischen den Kolben und den Bügel eingespannt sind und bei der Betätigung der Spannmittel auf die Scheibe aufgebracht werden, wobei die erste Bohrung (8) auf einem ersten und einem zweiten benachbarten Abschnitt (S1, S2) ihrer Länge einen ersten bzw. einen zweiten Innendurchmesser (D1, D2) aufweist, von denen der zweite (D2) größer als der erste (D1) ist und wobei der kleinere Durchmesser (D1) in demjenigen der beiden Abschnitte der ersten Bohrung (8) untergebracht ist, auf den die erste Stange (6) beim Eindringen zuerst trifft, dadurch gekennzeichnet, daß der erste Sitz zusätzlich zur ersten Bohrung (8) durch das Innere (130) eines Ringes (13) aus Elastomermaterial gebildet ist, der in der Verlängerung des ersten Abschnitts (S1) der ersten Bohrung (8) so untergebracht ist, daß er zu diesem ersten Abschnitt (S1) benachbart und von dem zweiten Abschnitt (S2) beabstandet ist, und daß die zweite Bohrung (9) auf ihrer gesamten Länge einen Durchmesser aufweist, der gleich dem kleinen Durchmesser (D1) ist.

2. Scheibenbremse nach Anspruch 1, dadurch gekennzeichnet, daß der erste Abschnitt (S1) eine geringere Länge als der zweite Abschnitt (S2) hat.

3. Scheibenbremse nach Anspruch 1 oder 2, dadurch gekennzeichnet, daß der zweite Sitz zumindest teilweise durch einen zweiten Ring (14) aus Elastomermaterial, der dem ersten ähnlich ist, gebildet ist.

## Claims

1. Disk brake for a motor vehicle comprising: a caliper (1) straddling a brake disk (2); a carrier (3) fixed to the vehicle; application means comprising a cylinder (4) secured to the caliper and closed by a piston (5); guide means allowing the caliper to slide relative to the carrier when the application means are actuated, these guide means themselves including first and second identical cylindrical guide pins (6, 7) parallel to each other and each having a bound end (60, 70) fixed to the caliper and a free end (61, 71), and first and second housings at least partially formed by first and second respective bores (8, 9) made in the carrier and in which the first and second guide pins respectively slide, at least one of these guide pins being fixed to the caliper by adjustable fixing means (12, 41), allowing it, before it is permanently fixed to the caliper, to adopt a plurality of possible positions spaced apart from one another in a direction (T) tangential to the disk; and two friction pads (10, 11) pointing towards opposite faces (2a, 2b) of the disk (2), trapped between the piston and the caliper and applied to the disk when the application means are actuated, the first bore (8), over first and second contiguous sections (S1, S2) of its length, having first and second respective inside diameters (D1, D2), the second (D2) of which is greater than the first (D1), and the smaller diameter (D1) being formed in that one of the two sections of the first bore (8) that the first guide pin (6) encounters first when penetrating therein, characterized in that the first housing is formed, in addition to the first bore (8) from inside (130) a ring (13) of elastomeric material located in the extension of the first section (S1) of the first bore (8) so that it is contiguous with this first section (S1) and some distance from the second section (S2), and in that the second bore (9) over its entire length has a diameter equal to the said small diameter (D1).

2. Disk brake according to Claim 1, characterized in that the first section (S1) has a length which is less than that of the second section (S2).

3. Disk brake according to Claim 1 or 2, characterized in that the second housing is at least partially formed by a second ring (14) made of elastomeric material, similar to the first one.
